# EUROPEAN PATENT SPECIFICATION

(11) **EP 0 664 438 B1**
(45) Date of publication and mention of the grant of the patent: **07.10.1998**
(21) Application number: 94400150.2
(22) Date of filing: 25.01.1994
(51) Int. Cl.: G01C 19/56

(54) **Comb drive micromechanical tuning fork gyro**
Mikromechanischer Stimmgabelumdrehungsmesser mit kammförmigen Antriebselemente
Gyromètre micromécanique à diapason avec entrainement en forme de peigne

(43) Date of publication of application: 26.07.1995
(73) Proprietor: THE CHARLES STARK DRAPER LABORATORY, INC., Cambridge, MA 02139-3563 (US)
(72) Inventor: Bernstein, Jonathan J., Medfield, Massachusetts 02052 (US); Weinberg, Marc S., Needham, Massachusetts 02192 (US)
(74) Representative: Thévenet, Jean-Bruno

(56) References cited:
- WO-A-92/01941
- WO-A-93/05401
- US-A- 5 016 072
- US-A- 5 203 208
- PROCEEDINGS IEEE MICRO ELECTROMECHANICAL SYSTEMS F.LAUDERDALE,7-10 FEBR. 1993;93CH3265-6;XP366871 BERNSTEIN ETAL"A MICROMACHINED COMB-DRIVE TUNING FORK RATE GYROSCOPE",PAGE 143-148

## Description

### FIELD AND BACKGROUND OF THE INVENTION

The present invention relates to micromechanical microfabricated inertial rate sensors and in particular to a vibrating tuning fork rate sensor. Micromechanical inertial rate sensors are known either of a gyroscopic structure in which a double gimbal system utilizes a vibrating gimbal element, or a tuning fork structure utilizes a vibrating set of tuning forks for sensing inertial rates about an input axis and providing a corresponding motional change or rotation of the suspended element that can be detected to provide an indication of inertial rate. Such microfabricated devices hold a promise for large scale production and therefore low cost. The quest in such devices centers on the desire for improved sensitivity or increased signal to noise ratio in order to increase the range of applications where such devices may be used as well as a reduction in the fabrication steps to reduce overall processing complexity and cost as well as to improve the yield in the manufacture of such devices from silicon wafers using photolithograpic techniques well known in the art of semiconductor manufacture.

WO92/01941 discloses a micro-mechanical rotational-speed sensor comprising two oscillators suspended in parallel over a frame by means of suspension rods. The oscillators are excited to oscillate along a first direction, and deviations of the oscillators in a second direction perpendicular to the first direction are detected. No rotatable structure is used in this device.

### SUMMARY OF THE INVENTION

The invention is defined in the appended Claims 1-25.

According to the teaching of the present invention there is provided a microfabricated tuning fork inertial rate sensor which utilizes a pair of electrode sets comprising meshed electrode fingers for the drive and driven electrodes of each vibrating element in combination with fabrication techniques which together not only improve substantially system sensitivity and signal to noise ratio but also reduce the complexity and increase the reliability of microfabrication.

In particular, an assembly comprising first and second vibrating elements supported at their ends by support electrodes and further having a plurality of driven electrodes extending orthogonally from the vibrating elements is suspended by a set of flexures from each of the opposite support electrodes to a surrounding semiconductor frame or substrate. Supported and extending from the surrounding frame or substrate is a complementary set of drive electrode fingers which mesh or extend between the fingers of the driven electrodes of the vibrating elements providing substantial overlap and an increased capacitive area therebetween. The vibrating elements are substantially linear, microfabricated elements which extend parallel to and on opposite sides of the axis through the flexures. Additional mass is provided by microfabricating it onto a side of the vibrating elements opposite to the driven fingers extending therefrom.

Four sense and/or torque electrodes are typically buried in the supporting and underlying semiconductor substrate or frame under opposite ends of the support elements for the vibrating elements. Sense and drive electronics are connected to the sense electrodes, the drive fingers and to the flexure supported assembly. The drive electronics sets the vibrating elements into opposed vibration which couples an input rate about an axis orthogonal to the support axis through the flexures into a rotational vibration of the suspended assembly about the flexures. This motion produces a signal resulting from the variation in capacitance between the support electrodes and the underlying sense electrodes which the sense electronics utilizes as an indication of input rate and, optionally, to torque to rebalance the suspended assembly to a neutral position. Sense and torque electrodes are located beneath electrode supports, and alternatively directly beneath proof masses.

The microfabricated tuning fork design of the present invention utilizes a large area of capacitance between the drive and driven electrodes in combination with a high change in that capacitance per unit motion of the vibrating elements due to the meshed drive and driven finger configuration. In addition, the fabrication techniques permit the realization of more massive vibrating elements, including the auxiliary masses attached thereto, which together cooperate to increase system sensitivity substantially. Gyroscopic transducers are implemented having multiple proof masses with pairs of meshed drive and driven fingers symmetrically disposed thereabout.

Fabrication techniques which can be simplified over prior designs utilize several exemplary technologies. Among these are forming the suspended assembly and its anchoring electrodes along with the support electrodes for the drive electrode fingers of polysilicon or electroplated metal. The supported assembly may also be microfabricated by selective etching of an epitaxially grown silicon layer over a pre-existing silicon substrate with diffused sense electrodes where the structure of the assembly is defined by boron diffusion into the grown layer and subsequent etching. Wafer bonding technologies may also be utilized to deposit on top of the silicon substrate, by bonding, a highly-doped layer contributed by a second wafer which is ultimately etch removed leaving the superimposed boron doped layer to be photolithographically configured to provide the structure of the rotationally supported assembly.

In all cases the first or underlying substrate will typically be selectively diffused with a boron P+ diffusion to define the underlying sense electrodes although a surface film of polysilicon or metal may be used, or bridge electrode technology may be utilized as desired.

### BRIEF DESCRIPTION OF THE DRAWING

These and other features of the present invention are more fully set forth below in the fully exemplary detailed description and accompanying drawing of which:
Fig. 1 is a top diagrammatic view of a micromechanical comb drive tuning fork inertial rate sensor according to a first embodiment of the invention;
Fig. 1A is a top diagrammatic view of an alternative embodiment of a micromechanical comb drive tuning fork inertial rate sensor;
Fig. 1B is a top diagrammatic view of another alternative embodiment of a micromechanical comb drive tuning fork inertial rate sensor;
Fig. 1C is a top diagrammatic view of yet another alternative embodiment of a micromechanical comb drive tuning fork inertial rate sensor;
Fig. 1D is a top diagrammatic view of still another alternative embodiment of a micromechanical comb drive tuning fork inertial rate sensor;
Fig. 1E is a top diagrammatic view of still another alternative embodiment of a micromechanical comb drive tuning fork inertial rate sensor;
Fig. 2 is a side sectional view taken along sections of Fig. 1;
Fig. 3 is a top diagrammatic view of a comb drive vibrating tuning fork inertial rate sensor according to a second embodiment of the invention;
Fig. 4 is a sectional view of the embodiment of Fig. 3;
Fig. 5 is a sectional view of a yet further embodiment of the invention;
Fig. 6 is a sectional view of one form for electrode fabrication;
Fig. 7 is a top view illustrating the fabrication of meshing drive and driven electrodes according to an alternative fabrication technique of the invention.

### DETAILED DESCRIPTION OF THE INVENTION

The present invention contemplates an inertial rate sensor such as a tuning fork gyro of micromechanical fabrication in which drive and driven electrode pairs, responsible for imparting vibrational motion to the tuning fork vibrating elements, are formed by plural respective interleaved fingers which greatly increases the area and capacitance as well as capacitance change with motion of the device so as to substantially enhance the system sensitivity. In addition, such a drive structure is consistent with fabrication techniques that allow for a greater mass to the vibrating element which cooperates with the higher efficiency drive in providing an increased sensitivity. The resultant tuning fork gyro has low sensitivity to acceleration as the opposing motion of the tines (including masses), cancels out the common mode acceleration effect. The tuning fork structure has a high mechanical quality factor (Q), due to the opposing motion which tends to reduce the stress reaching the support points and hence reduce the coupling of energy out of the structure.

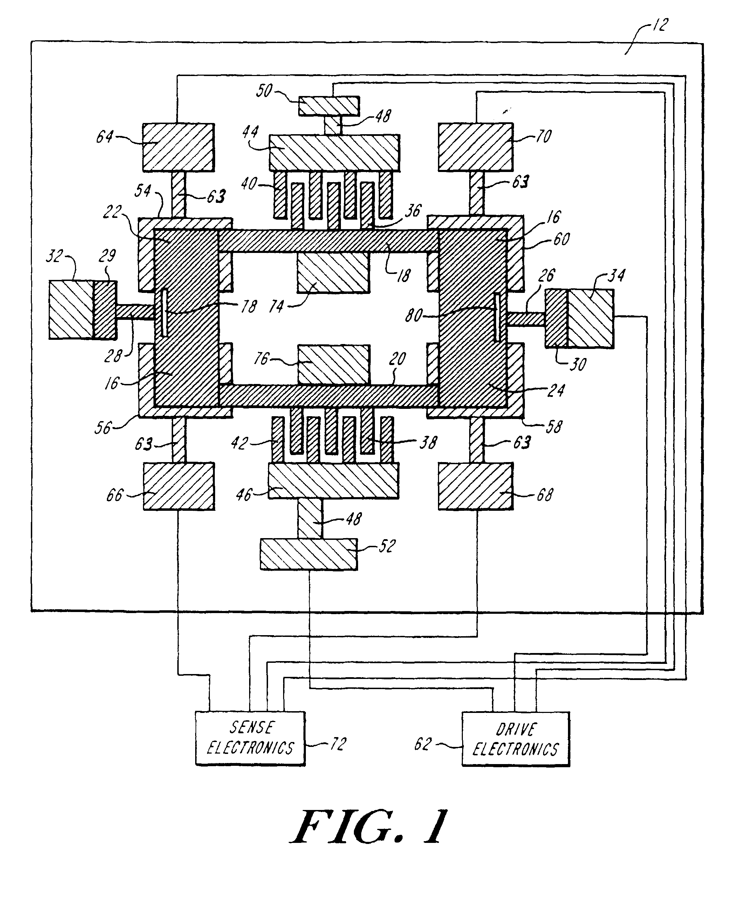

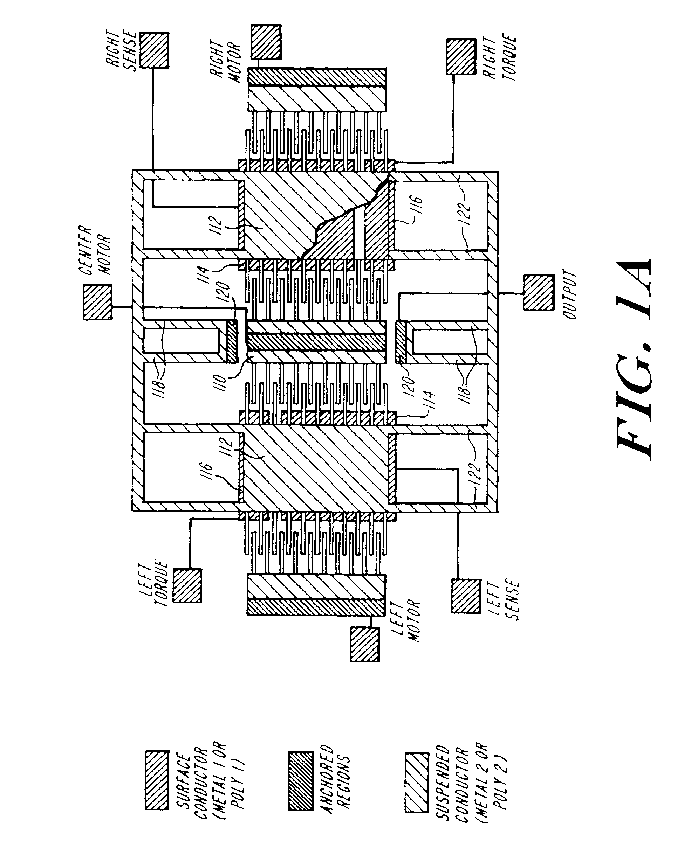

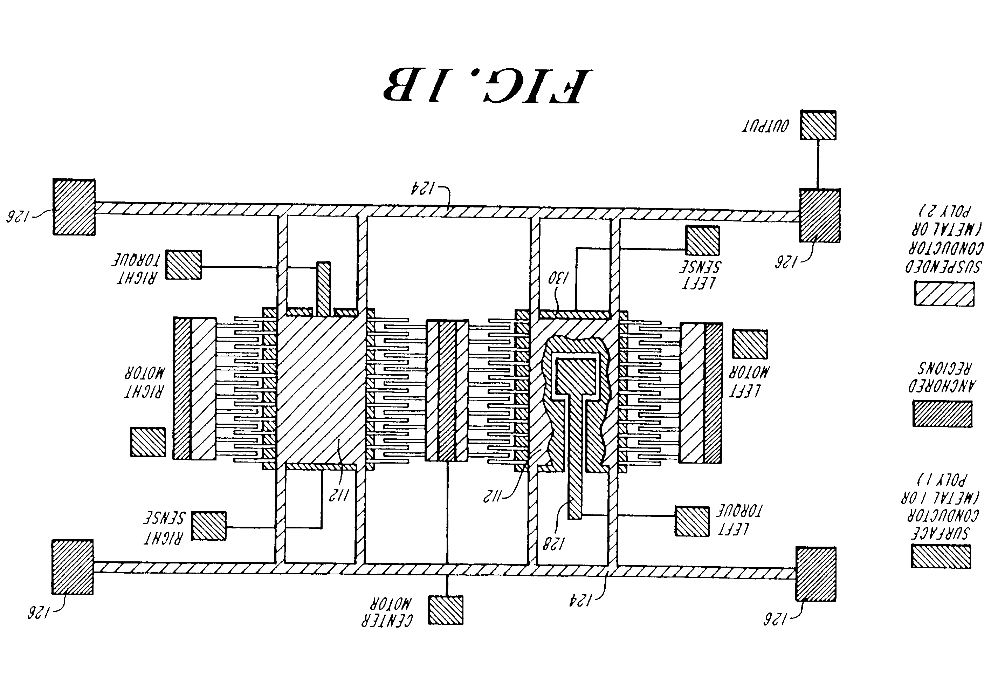

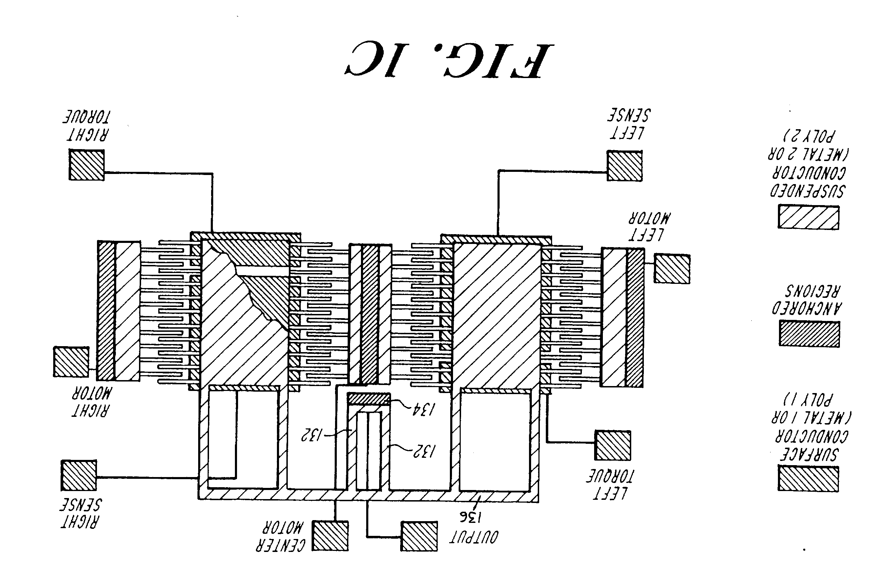

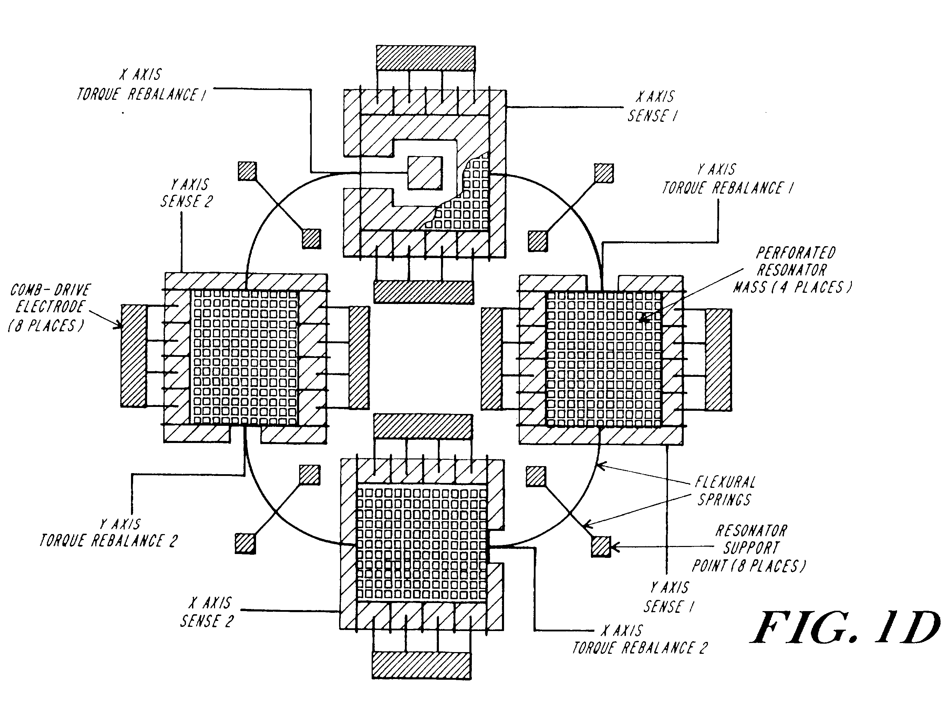

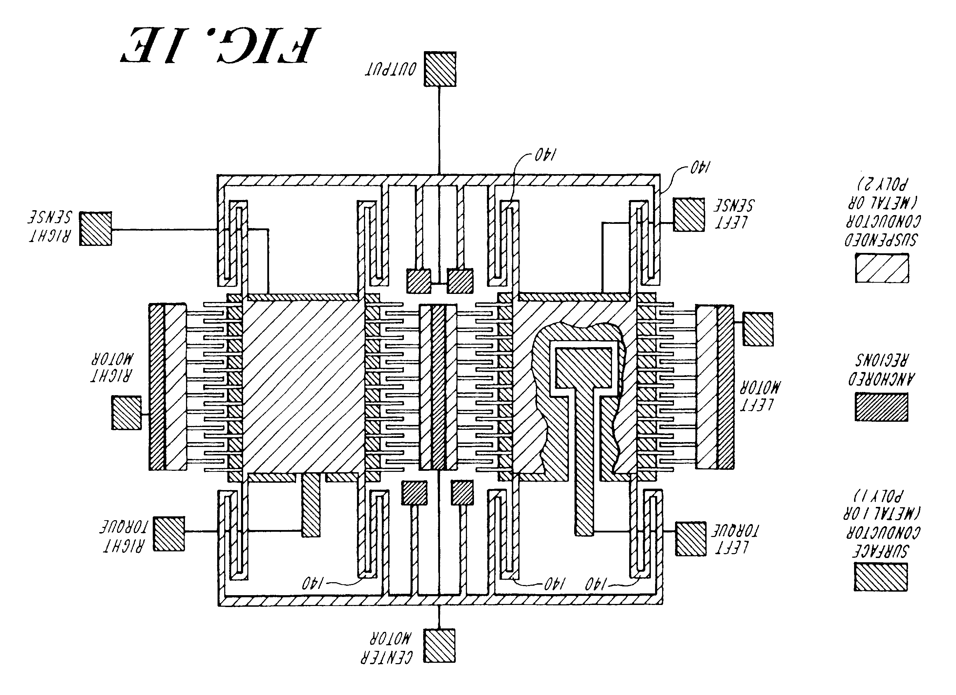

According to one aspect of the invention illustrated in Fig. 1 there is shown a surface 12 of a silicon substrate 14 having suspended thereover a rotatable assembly 16 comprising first and second vibrating elements 18 and 20 which extend between electrode supports 22 and 24 therefor. Flexures 26 and 28 extend from the remote edges of the support electrodes 22 and 24 to respective support pillars 29 and 30 which are in turn tied into the surface 12 of substrate 14 through attachment or surface electrodes 32 and 34.

A rotation axis is defined by an axis extending centrally through the flexures 26 and 28. On opposite sides of the vibrating elements 18 and 20 extend driven electrode fingers 36 and 38 respectively. These are interleaved or meshed with drive electrodes 40 and 42 which extend from support elements 44 and 46 tied to the surface 12 of the substrate 14. Electrical paths 48 typically extend from the supports 44 and 46 to electrical contacts 50 and 52.

Typically, the substrate 14, of silicon in preferred form, has the surface layer 12 formed as a dielectric such as silicon dioxide from oxidation of the surface thereof. Buried and implanted slightly below the dielectric layer 12 are sense electrodes 54, 56, 58 and 60, located below the remote ends of each of the support electrodes 22 and 24 in order to sense the variation in gap between those support electrodes and the sense electrodes reflective of rotation of the assembly 16 about the axis through the flexures 28 and 26 which provide a flexural torque resistance to such rotation. Such rotation is induced, once the vibrating elements 18 and 20 have been set in motion by electrical signals applied from drive electronics 62 connected to the assembly 16 via contact 34 and the drive electrodes 40 and 42 via contacts 50 and 52 in a response to a rate input typically about an axis in the plane of the drawing of Fig. 1 and orthogonal to the axis along flexures 26 and 28. The sense electrodes 54, 56, 58 and 60 are electrically contacted through vias 63 to contacts 64, 66, 68 and 70 which extend above the surface layer 12 as metallizations extending through apertures in the dielectric layer to contact the vias 63.

Sense electronics 72 are interconnected to the assembly 16 and to sense electrodes 54, 56, 58 and 60 through their electrical contacts and vias and operate, using known technology, to process the variation in capacitance between each of the sense electrodes and the support electrodes of the assembly 16. For this purpose, the sense electronics will typically apply an oscillatory signal to the assembly 16 via the electrode 34 and differentially sense the signal on electrode pairs 54 and 60 relative to electrode pairs 56 and 58 as an indication of rotation of the assembly 16. Alternatively, one set of electrode pairs such as 54 and 56 may be used to apply rebalance torque to the substrate 16 dependant upon the magnitude of the sensed rotation utilizing known torque to balance electronics. For this purpose reference may be had to commonly assigned U.S. Patents and Applications Serial No. 07/479,854, filed February 14, 1990 ; U.S. Patent Application Serial No. 07/757,706, filed September 11, 1991 now pending and U.S. Patent No. 5,016,072, Issued May 14, 1991.

In order to increase the sensitivity of the rate sensor provided by the rotatable and vibrating assembly 16, additional weights or masses 74 and 76 are provided on the interfacing edge of the vibrating elements 18 and 20 away from the edge containing the driven electrodes 36 and 38. The basic mechanism of the gyroscopic action is the Coriolis force acting on the proof masses 74, 76 when the vibrating tuning fork is rotated. This causes the masses to rotate about the output axis at the drive resonant frequency. The masses may be of the same material as the rest of assembly 16 as described below or of a different material such as a higher density metal. In order to provide a stress relief in the assembly 16 between the support pillars 29 and 30 the edges of the support electrodes 22 and 24 where the flexures 28 and 26 join them are slotted with stress relief slots 78 and 80 which allow for the material internal stresses in the assembly 16, which may occur during processing by shrinkage of the polysilicon or metallization typically utilized for the fabrication of the assembly 16.

Alternative embodiments of a tuning fork rate sensitive structure are illustrated in Figs. 1A-1D. The gyroscopic micromechanical implementation illustrated in Fig. 1A, has a center motor 110 having proof masses 112 with comb structures disposed on both sides thereof. Disposing the proof masses 112 and comb structures as illustrated with respect to the center motor 110, increases symmetry and allows both drive and sense in the in-plane resonance. The sense electrodes 114 and torque electrodes 116, in this illustrative embodiment, are disposed directly beneath the oscillating proof masses 112 (as opposed to being located beneath the electrode supports 22, 24 as illustrated in Fig. 1).

Additionally, as illustrated in Fig. 1A, multiple torsion springs 118 or flexures can be implemented, such as in pairs, to provide the rotational axis for the transducer. The torsion springs 118 have anchored regions 120 that are located inward toward the center of the device, reducing stress and increasing out-of-plane stiffness. Moving the anchored regions 120 toward the masses and device center, increases stiffness by effecting two short beams or springs which bend less, as opposed to one long spring. Similarly, multiple support springs 122 are implemented in pairs supporting the masses 112 on opposing sides thereof.

An embodiment illustrated in Fig. 1B, implements the symmetrical proof masses, including spring supports 124 which extend outwardly from the center of the device to anchored regions 126. The layout illustrated has an advantageous set of resonant modes and frequencies, and permits greater fabrication control to allow the tuning fork mode to be matched to be 5% away from the output tilt mode resonant frequency. Preferably, the structure is designed so that the drive and sense resonant frequencies are 5% apart, to yield mechanical gain near resonance on the sense axis, without coupling and coincident non-linearity, and resulting in an increase by a factor of approximately three of the signal to noise ratio of the device.

As illustrated, the embodiment in Fig. 1B also incorporates torque and sense electrodes 128 and 130, respectively, fabricated to have a common centroid beneath the proof masses 112. The torque electrode 128 is fabricated centered beneath the proof mass 112 having the sense electrode 130 disposed thereabout with a sufficient gap therebetween. The common centroid facilitates a centered electric field resulting in substantially symmetrical lines of force exerted by the torque electrode on the proof mass and greater symmetry of the capacitively sensed output.

Figs. 1C, 1D and 1E illustrate further alternative embodiments according to the invention. Fig. 1C illustrates a cantilevered embodiment of the symmetrical proof mass gyroscopic transducer. A single pair of flexures 132 extending from a single anchored support point 134 supports the transducer element via a single spring support 136. The single ended embodiment illustrated has the same functionality as the devices discussed herein.

Fig. 1D shows that a plurality of gyroscopic transducers according to the invention can be configured to effect outputs in a plurality of axes. In this illustrative embodiment, four symmetrical transducers are configured to effect two tuning fork gyros oscillating 180 degrees out of phase. Rotation is sensed about both the X and Y axes. Advantageously, such a configuration implements mode shapes that lead to highly linear spring bending.

An embodiment that effects added horizontal compliance in a compact space is illustrated in Fig. 1E. The pair of proof masses are attached via a plurality of folded support springs 140. The proof masses each have bilaterally symmetrical torque and sense electrodes having a common centroid, as discussed hereinbefore, disposed therebeneath. The springs 140 can be folded as shown in Fig. 1E, or in alternative configurations, to yield greater compliance in the in-plane direction while minimizing the overall size of the springs.

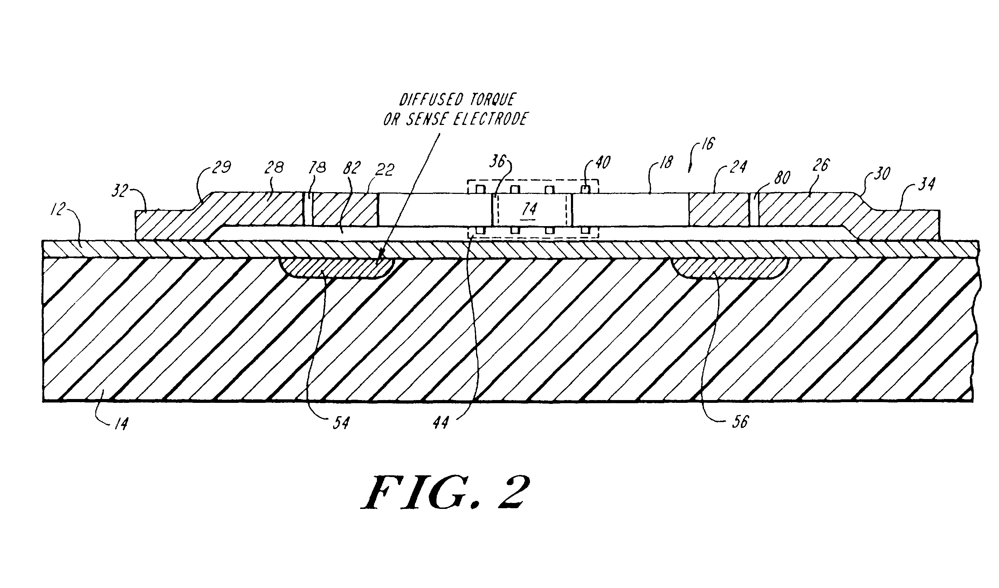

Fig. 2 illustrates one embodiment of the Fig. 1 structure fabricated by bridge construction technology in either polysilicon or metallization such as nickel or gold. The view of Fig. 2 is shown by section lines along the axis through the flexures 28 and 26 as to the assembly 16 but along a section line through the electrodes 54 and 60 as to the substrate 14 and surface 12. As illustrated in Fig. 2 sense electrodes 54 and 56 are shown below the surface layer 12 and the oxide layer thereon and are typically formed in an initial processing sequence by photolithographic technology as is represented by the above-identified patents and applications by applying, through selective apertures in a oxide layer over the substrate 14, a high intensity boron diffusion to produce a highly conductive P+ region. Above the layer 12 the assembly 16 is formed as a bridge structure in which the pillars 29 and 30 extend upwardly by being formed over intervening dielectric or resist layers in a region 82 between the layer 12 and the assembly 16 utilizing known photolithographic microfabrication procedures such as described in the above-identified patents and application.

In the case of a metallization for the assembly 16, a plating layer is first layed down on top of the layer 12 and above a spacer in the region 82 and electro-forming steps utilized thereafter to electroplate the assembly 16, the contacts 34 and 32 and the support pillars 29 and 30 as well as to form by similar bridging techniques the drive and driven electrodes 40, 42 and 36, 38 along with their contact leads and supports 50, 52, 48, 44, 46. After plating, the electro-contact underlayer is etched away leaving the isolated metal structures illustrated in Fig. 1.

In the case of polysilicon formation, again as illustrated in the above-identified applications, a similar processing sequence using photolithographic techniques is utilized except that the elements formed in metal are replaced by a sputter deposition of polysilicon in the same patterns.

The weights 74 and 76 can be formed integrally with the elements 18 and 20 or by separate formation of silicon, polysilicon, metallizations or higher density weight elements as known in the art.

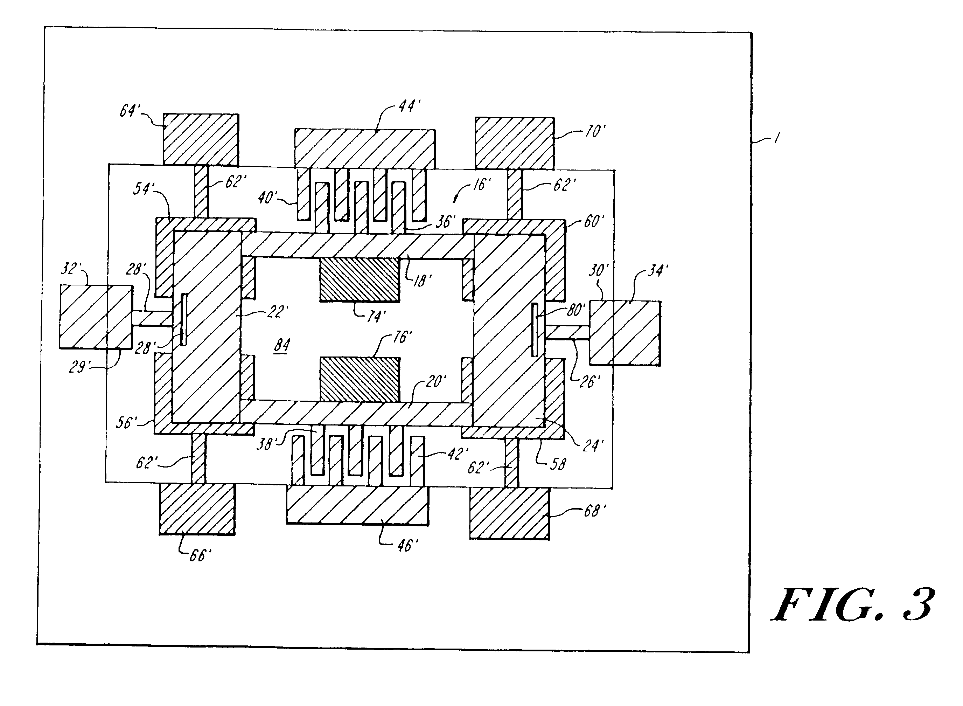

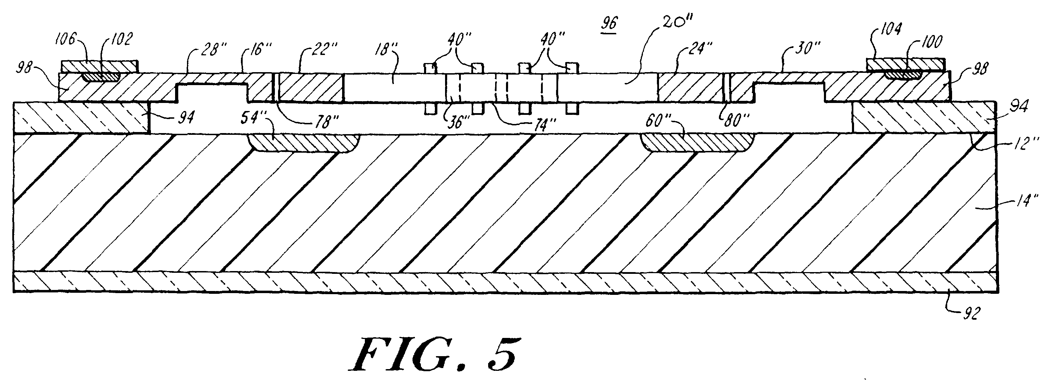

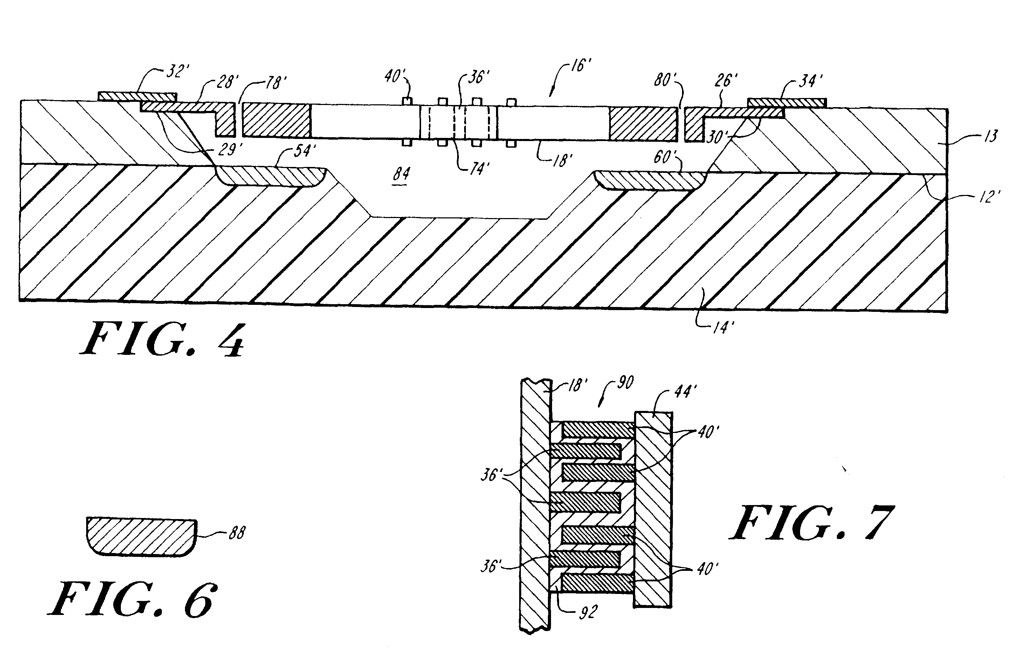

With reference to Fig. 3 a comb drive tuning fork inertial rate sensor of alternative construction is illustrated in which like elements are identified with the same numbers as used in Fig. 1, primed. The embodiment of Fig. 3, illustrated in section in Fig. 4 along similar section lines to those utilized for Fig. 2, is fabricated using micromechanical fabrication techniques and selective diffusion of boron P+ dopants in a single semiconductor chip. The substrate 14' includes, above an original surface layer 12' in which the sense electrodes 54' and 60' are diffused, an additional epitaxially grown single, or poly, silicon layer 13 in which the assembly 16' is fabricated. For that purpose, the assembly 16' is formed by selected diffusion in the pattern of the vibrating elements 18', 20', support electrodes 22', 24', driven electrodes 38', 36' as well as drive electrodes 40', 42' and electrode supports 44' and 46'. A separate, shallower diffusion is utilized for the flexures 26' and 28' as well as for their extensions and supports 29' and 30' into the epitaxially grown layer 13. Metallizations 32' and 34' are made thereover providing electrical contact through the supports 29' and 30' to the assembly 16'. After those diffusions are made, selective etching techniques are utilized to release the assembly 16' from the epitaxial layer 13 leaving a pit 84 as shown.

The drive and driven electrodes 36, 38 and 40, 42 and 36' 38'; 40', 42' are, when fabricated by boron diffusion as illustrated in Fig. 6, of a somewhat rounded configuration shown by the diffusion 88. A sharper edge to the diffusion 6 can be provided utilizing a reactive ion etch approach as illustrated in Fig. 7 in which, for example, a single diffusion of a high density P+ boron dopant is made to form the regions 18' and 44' and an intervening zone 90. Reactive ion etching is then utilized to erode, using photolithographically exposed zigzag pattern 92, the region between what then becomes separated drive electrodes 40' and driven electrodes 36'. This allows close spacing of the drive and driven electrodes such that their capacitance is greatly increased and, importantly the variation in capacitance with relative vibrational motion between, for example, the vibrating element 18' and the drive electrode support 44'. This allows a far more effective force coupling to the vibrating elements 18, 18', 20, 20'. The technology of fabrication illustrated above also permits a bulkier and thus heavier vibrating element 18, 18', 20, 20' due in part to their greater vertical extent as well as the additional mass, without an out of planar component, that can thereby be imparted to the masses 74, 74' and 76, 76'. There results an improvement in sensitivity or signal to noise ratio of the device thus fabricated.

With respect to Fig. 5 there is illustrated a yet further form for the manufacture of the device, typically illustrated in top surface view in Fig. 3. This device results from the substrate welding of a first substrate 14" (utilizing similar numbers, but with a double prime, to their use elsewhere herein) which has a bottom passivation with a dielectric layer 92. The top layer 12" has sense and/or torque electrodes 54", 60" as well as those not shown formed as above. These are left exposed through an oxide layer 94 on the surface 12" of the substrate 14". At this point a second silicon substrate having a highly doped P+ layer 98 on top of a silicon substrate 96 is surface bonded to the dielectric 94. Typically, the layer 98 at the point of bonding will extend completely over the substrate 96 but is only shown in the final dimensions of the completed structure. Layer 96 is then etched away. Metallization regions 100, 102 are formed in layer 98 over which aluminized layers 104, 106 are plated to provide electrical contact to the highly doped layer 98 remaining after the substrate silicon 96 is etched away. Thereafter the layer 98 is patterned to provide the suspended assembly 16" with the vibrating elements 18", 20" support electrodes 22", 24" and flexures 28" and 30" and driven fingers 36", 38" as well as drive fingers 40", 42" and weighs 74", 76".

While various embodiments disclosed are implemented having separate electrodes for sensing and torquing, it should be appreciated that a single electrode can be used in association with each proof mass to effect both the torque and sense functions by frequency multiplexing.

Further, while closed loop systems are discussed hereinabove and in the referenced patents and applications, one of ordinary skill in the art will appreciate that various embodiments of the gyroscopic transducer disclosed can be operated open loop so as to dispense with the torque to rebalance loop. Although such operation limits dynamic range, device operation and control electronics may thusly be simplified.

Although the invention has been shown and described with respect to illustrative embodiments thereof, it should be understood by those of ordinary skill in the art that the foregoing and various other changes, additions and omissions in the form and detail thereof may be made without departing from the scope of the invention as delineated in the claims.

## Claims

1. An inertial rate sensor comprising :
a first weighted element (18) suspended to rotate about a first axis and adapted to vibrate in a direction substantially orthogonal to said first axis;
a set of driven electrodes (36) projecting from said suspended element in the direction of vibration;
a set of drive electrodes (40) freely meshing with said set of driven electrodes (36);
a source of vibration drive (62) contacting, through said suspended element (18), said set of driven electrodes (36) and said set of drive electrodes (40) with opposite polarity signals to induce vibration of said suspended element (18);
a plurality of position sensors (54, 60) placed at locations facing said suspended element (18) wherein spacing between said plurality of position sensors (54,60) and said suspended element (18) varies with rotation thereof about said axis;
an electrical signal source (72) for energizing said plurality of position sensors (54, 60) relative to said suspended element (18); and
a signal sensor (72) responsive to at least a subset of said plurality of position sensors (54, 60) for receiving a signal varying with rotation of said element (18) about said axis.

2. The rate sensor of claim 1 further including a second suspended, weighted element (20) extending substantially parallel to said first suspended element (18) on an opposite side of said axis of rotation and having a corresponding second drive electrode set (42) connected to said drive source (62) to induce vibration of said second vibrating element.

3. A comb drive tuning fork microfabricated structure comprising:
a substrate (12, 14);
an assembly (16) on said substrate having :
first and second elongated vibratable elements (18, 20) joined at the ends thereof by first and second support electrodes (22, 24) so that said first and second vibrating elements (18, 20) extend substantially parallel to each other and to a rotation axis running therebetween;
first and second flexures (28, 26) extending from said support electrodes (22, 24) away from said first and second vibratable elements (18, 20) to points of attachment (29, 32; 30, 34) to said substrate (12, 14) along said axis allowing said first and second support electrodes (22, 24) and said first and second vibratable elements (18, 20) to rotate about said axis;
first and second weights (74, 76) respectively attached to said first and second vibratable elements (18, 20);
each said first and second vibratable element (18, 20) having a plurality of driven electrodes (36, 38) projecting away therefrom in a direction orthogonal to said axis;
first and second drive electrodes (40, 42) extending between the driven electrodes (36, 38) of said first and second vibratable elements (18, 20), said first and second drive electrodes (40, 42) being physically attached to said substrate (12, 14) but electrically isolated therefrom;
plural sense electrodes (54, 60, 56, 58) in said substrate (12, 14) under said support electrodes (22, 24) at locations thereof distant from said axis of rotation;
wherein a portion of said vibratable elements (18, 20), said driven and drive electrodes (36, 38; 40, 42), said weights (74, 76), said support electrodes (22, 24) and said flexures (28, 26) is selected from the group consisting of conductive silicon, conductive polysilicon, and a plated metal.

4. The structure of claim 3, wherein said plated metal is selected from the group consisting of nickel and gold.

5. The structure of claim 3, wherein said substrate comprises a dielectric surfaced silicon substrate (14) wherein said drive electrodes (40, 42) and said flexures (28, 26) are attached to the dielectric surface (12) thereof.

6. The structure of claim 3, further including a stress relief slit (78, 80) in said support electrodes (22, 24) adjacent to a point of attachment for the flexures (28, 26).

7. The structure of claim 5, wherein said plural sense electrodes (54, 60, 56, 58) include regions diffused into said silicon under said dielectric surface (12).

8. The structure of claim 3, further including a source (62) of electrical drive energy attached to said drive electrodes (40, 42) and through said flexures (28, 26) to said driven electrodes (36, 38) for inducing vibration of said vibratable elements (18, 20) in a direction orthogonal to said axis of rotation;
a sense signal source (72) and a sense signal sensor (72) cooperatively connected to said plural sense electrodes (54, 60, 56, 58) and said first and second support electrodes (22, 24) to provide an indication of rotation of said first and second support elements (22, 24) about said rotation axis in response to inertial rates applied to said vibratable elements (18, 20) when vibrating.

9. The structure of claim 8, further comprising a source of torque electrical energy connected to said first and second support electrodes (22, 24) and at least a subset of said plural sense electrodes (54, 60, 56, 58) to torque said first and second support electrodes (22, 24) to a pre-determined position in response to sensed signals representative of rotation of said first and second support electrodes (22, 24).

10. A process for fabricating a comb drive tuning fork structure adapted for inertial rate sensitivity comprising the steps of:
providing a silicon substrate (14);
forming in a surface (12) of said substrate (14) a plurality of sense electrodes (54, 60, 56, 58) electrically isolated from each other and electrically contactable through a surface portion (12) of said substrate (14); supporting over the surface (12) of said substrate (14) having said plurality of sense electrodes (54, 60, 56, 58), by flexures (28,26) for rotation about an axis through said flexures (28, 26), an assembly (16) of first and second vibratable elements (18, 20) supported at opposite ends by first and second support electrodes (22, 24) such that said vibratable elements (18, 20) extend either side of said axis of rotation and have, extending away therefrom, first and second sets of driven electrodes (36, 38) on one side and first and second respective masses (74, 76) on the other side; forming on said substrate (14) first and second drive electrodes (40, 42) which mesh with said first and second driven electrodes (36, 38) of said vibratable elements (18, 20) and electrical contacts for said first and second flexures.

11. The process of claim 10, wherein said supporting step includes the step of :
growing a semiconductor layer (13) over said plurality of sense electrodes (54', 60', 56, 58);
forming said assembly (16') in a surface of said grown layer (13); and
freeing said assembly (16') from said grown layer (13) leaving attachment thereto through said first and second flexures (28', 26') to allow rotation of said assembly (16').

12. The process of claim 11, wherein said growing step includes the step of epitaxially growing a silicon layer (13).

13. The process of claim 11, wherein said substrate forming step includes the step of producing etch resistant doped regions corresponding to said substrate (14') and said first and second flexures (28',26') in the surface of said grown layer (13).

14. The process of claim 11, wherein said freeing step includes the step of etching said grown layer (13) except for regions defining said formed assembly (16').

15. The process of claim 13, wherein said etch resistant portion is created by diffusing boron into the surface of said grown layer (13).

16. The process of claim 10, wherein said supporting step includes the step of forming a bridge structure over the surface of silicon containing said plural sense electrodes (54, 60, 56, 58) as said assembly.

17. The process of claim 16, wherein said bridge forming step includes the step of forming the bridge structure of etch resistant polysilicon or silicon and the drive electrode forming step includes forming the drive electrodes (40, 42) of etch resistant polysilicon or silicon.

18. The process of claim 16, wherein both said drive electrode and said bridge structure forming steps include the steps of forming said bridge structure and drive electrodes (40, 42) of a metal selected from the group consisting of nickel and gold.

19. A process for forming a comb driven tuning fork structure for use in rate sensor applications comprising the steps of:
providing a silicon substrate (14") having a planar surface (12");
forming in said planar surface (12") a plurality of sense electrodes (54", 60") through an insulating layer (94) aperture;
providing a second silicon substrate having a planar surface (98) into which is diffused an etch resistant diffusant;
bonding said first and second silicon substrates planar surface to planar surface;
forming in said diffusion layer (98) an assembly (16") comprising flexures (28", 30") extending to regions of said insulating layer (94) of said first substrate (14") and having vibratable elements (18", 20") supported by electrode elements (22", 24") spaced parallel to each other about a rotation axis passing through said flexures (28", 30") with said vibratable elements (18", 20") having on one respective sides thereof a mass (74", 76") and on opposite respective sides thereof a plurality of driven electrodes (36", 38") in first and second sets forming separated fingers;
forming in said diffusion layer (98) and physically separated from said assembly (16") a plurality of drive electrodes (40", 42") comprising fingers fitting between the fingers of said driven electrodes (36", 38").

20. The process of claim 10, wherein said supporting step includes the steps of:
providing a second silicon substrate having a planar surface with a layer (98) of etch resistant diffusion therein;
forming a dielectric layer (94) over said first mentioned silicon substrate (14") surrounding said plurality of sensor electrodes (54, 60, 56, 58);
bonding said diffusion layer (98) to said dielectric layer (94) of said second and first substrates respectively;
said assembly (16") being formed in said diffusion layer (98) in portions overlying said plurality of sense electrodes (54",60") by selective etching of said second silicon substrate diffusion layer (98).

21. The process of claims 19 or 20, further including the step of eliminating substantially all of said second semiconductor substrate in the region of said assembly (16").

22. The process of claim 21, further comprising the step of providing a metallized electrical contact (100, 104; 102, 106) to said assembly (16").

23. The process of claims 10 or 19, further including the step of forming at least one of said driven and drive electrode fingers by the steps of:
forming electrically conducting regions (44'; 18') in said assembly in the regions for said drive and driven electrodes (40', 36'); and dimensioning edges of said conductive regions (44'; 18') by reactive ion etching to separate said drive and driven electrodes (40'; 36').

24. The inertial rate sensor of claim 1, further comprising : at least one support spring (136) supportively attaching said first weighted element to at least one portional flexture (132) anchored at at least one end to a semiconductor mass (134).

25. The inertial rate sensor of claim 24, wherein said at least one support spring (140) is folded to permit greater compliance.

## Patentansprüche

1. Trägheitsratensensor mit:
einem ersten Gewichtselement (18), welches zur Drehung um eine erste Achse aufgehängt ist und zum Schwingen in einer Richtung im wesentlichen senkrecht zu der ersten Achse eingerichtet ist;
einem Satz angetriebener Elektroden (36), welche von dem aufgehängten Element in der Richtung der Schwingung vorstehen;
einem Satz von Antriebselektroden (40), welche frei mit dem Satz von angetriebenen Elektroden (36) ineinander greifen; einem Schwingungsquellenantrieb (62), welcher über das aufgehängte Element (18) den Satz angetriebener Elektroden (36) und den Satz von Antriebselektroden (40) mit Signalen entgegengesetzter Polarität zum Induzieren einer Schwingung des aufgehängten Elements (18) kontaktiert;
einer Mehrzahl von Positionssensoren (54, 60), welche an Orten gegenüberliegend dem aufgehängten Element (18) angeordnet sind, wobei der Abstand zwischen der Vielzahl von Positionssensoren (54, 60) und dem aufgehängten Element (18) mit der Drehung davon um die Achse variiert;
einer elektrischen Signalquelle (72) zum Versorgen der Vielzahl von Positionssensoren (54, 60) relativ zu dem aufgehängten Element (18) mit Energie; und
einem Signalsensor (72), welcher auf zumindest einen Untersatz der Vielzahl von Positionssensoren (54, 60) anspricht, zum Empfangen eines Signals, welches mit der Drehung des Elements (18) um die Achse variiert.

2. Ratensonsor nach Anspruch 1,
gekennzeichnet durch ein zweites aufgehängtes Gewichtselement (20), welches im wesentlichen parallel zu dem ersten aufgehängten Element (18) auf einer gegenüberliegenden Seite der Drehachse verläuft und einen entsprechenden zweiten Antriebselektrodensatz (42) aufweist, der mit der Antriebsquelle (62) zur Induzierung einer Schwingung des zweiten Schwingungselements verbunden ist.

3. Kammantriebsstimmgabel-Mikrostruktur mit:
einem Substrat (12, 14);
einer Anordnung (16) auf dem Substrat mit:
einem ersten und zweiten länglichen schwingungsfähigen Element (18, 20), welche an ihren Enden durch erste und zweite Halterungselektroden (22, 24) verbunden sind, so daß das erste und zweite schwingungsfähige Element (18, 20) im wesentlichen parallel zueinander und zu einer dazwischenliegenden Drehachse verlaufen;
einer ersten und zweiten Abbiegung (28, 26), welche von den Halterungselektroden (22, 24) weg von dem ersten und zweiten schwingungsfähigen Element (18, 20) zu Anbringungspunkten (29, 32; 30, 34) an dem Substrat (12, 14) entlang der Achse verlaufen und ermöglichen, daß die erste und zweite Halterungselektrode (22, 24) und das erste und zweite schwingungsfähige Element (18, 20) sich um die Achse drehen;
einem ersten und zweiten Gewicht (74, 76), welche an dem ersten und dem zweiten schwingungsfähigen Element (18, 20) angebracht sind;
wobei das erste und zweite schwingungsfähige Element (18, 20) jeweils eine Vielzahl von angetriebenen Elektroden (36, 38) aufweisen, die davon in einer Richtung orthogonal zu der Achse wegstehen;
einer ersten und zweiten Antriebselektrode (40, 42), welche zwischen den angetriebenen Elektroden (36, 38) des ersten und zweiten schwingungsfähigen Elements (18, 20) verlaufen, wobei die erste und zweite Antriebselektrode (40, 42) physikalisch an dem Substrat (12, 14) angebracht sind, aber elektrisch isoliert davon sind;
mehreren Erfassungselektroden (54, 60, 56, 58), in dem Substrat (12, 14) unter den Halterungselektroden (22, 24) an Orten davon, welche von der Drehachse entfernt sind;
wobei ein Teil der schwingungsfähigen Elemente (18, 20), die angetriebenen Elektroden und Antriebselektroden (36, 38; 40, 42), die Gewichte (74, 76), die Halterungselektroden (22, 24) und die Abbiegungen (28, 26) aus der Gruppe mit leitendem Silizium, leitendem Polysilizium und einem plattierten Metall ausgewählt ist.

4. Struktur nach Anspruch 3,
dadurch gekennzeichnet,
daß das plattierte Metall aus der Gruppe mit Nickel und Gold ausgewählt ist.

5. Struktur nach Anspruch 3,
dadurch gekennzeichnet,
daß das Substrat ein Siliziumsubstrat (14) mit dielektrischer Oberfläche aufweist, wobei die Antriebselektroden (40, 42) und die Abiegungen (28, 26) an dessen dielektrischer Oberfläche (12) angebracht sind.

6. Struktur nach Anspruch 3,
gekennzeichnet durch einen Spannungsentlastungsschlitz (78, 80) in den Halterungselektroden (22, 24) neben einem Anbringungspunkt für die Abbiegungen (28, 26).

7. Struktur nach Anspruch 5,
dadurch gekennzeichnet,
daß die mehreren Erfassungselektroden (54, 60, 56, 58) Bereiche aufweisen, welche in das Silizium unter der dielektrischen Oberfläche (12) diffundiert sind.

8. Struktur nach Anspruch 3,
gekennzeichnet durch eine Quelle (62) elektrischer Antriebsenergie, welche an die Antriebselektroden (40, 42) und über die Abbiegungen (28, 26) an die angetriebenen Elektroden (36, 38) angebracht ist, zum Induzieren einer Schwingung der schwingungsfähigen Elemente (18, 20) in einer Richtung orthogonal zu der Drehachse;
eine Erfassungssignalquelle (72) und einen Erfassungssignalsensor (72), welche kooperativermaßen mit den mehreren Erfassungselektroden (54, 60, 56, 58) und den ersten und zweiten Halterungselektroden (22, 24) verbunden sind, um eine Anzeige der Drehung des ersten und zweiten Halterungselements (22, 24) um die Drehachse ansprechend auf Trägheitsraten, welche bei der Schwingung an die schwingungsfähigen Elemente (18, 20) anlegbar sind, zu liefern.

9. Struktur nach Anspruch 8,
gekennzeichnet durch eine Quelle elektrischer Drehmomentenergie, welche mit der ersten und zweiten Halterungselektrode (22, 24) und zumindest einem Untersatz der mehreren Erfassungselektroden (54, 60, 56, 58) verbunden ist, um die erste und zweite Halterungselektrode (22, 24) in eine vorbestimmte Position ansprechend auf die erfassten Signale, welche die Drehung der ersten und zweiten Halterungselektroden (22, 24) repräsentieren, zu drehen.

10. Verfahren zum Herstellen einer Kammantriebsstimmgabel-Strukur, welche zur Erfassung der Trägheitsrate geeignet ist, mit folgenden Schritten:
Bereitstellen eines Siliziumsubstrats (14);
Bilden in einer Oberfläche (12) des Substrats (14) einer Vielzahl von Erfassungselektroden (54, 60, 56, 58), welche elektrisch voneinander isoliert sind und über einen Oberflächenabschnitt (12) des Substrats (14) elektrisch kontaktierbar sind;
Haltern einer Anordnung (16) eines ersten und zweiten schwingungsfähigen Elements (18, 20) über die Oberfläche (12) des Substrats (14) mit der Vielzahl von Erfassungselektroden (54, 60, 56, 58) durch Abbiegungen (28, 26) zur Drehung um eine Achse über die Abbiegungen (28, 26), welche an gegenüberliegenden Enden durch erste und zweite Halterungselektroden (22, 24) gehaltert sind, so daß die schwingungsfähigen Elemente (18, 20) auf beiden Seiten der Drehachse verlaufen und davon wegweisend erste und zweite Sätze angetriebener Elektroden (36, 38) auf einer Seite und erste und zweite jeweilige Massen (74, 76) auf der anderen Seite aufweisen;
Bilden einer ersten und zweiten Antriebselektrode (40, 42) auf dem Substrat (14), welche mit den ersten und zweiten angetriebenen Elektroden (36, 38) der schwingungsfähigen Elemente (18, 20) ineinandergreifen und elektrische Kontakte für die ersten und zweiten Abbiegungen.

11. Verfahren nach Anspruch 10,
dadurch gekennzeichnet,
daß der Halterungsschritt folgende Schritte aufweist:
Aufwachsen einer Halbleiterschicht (13) über der Vielzahl von Erfassungselektroden (54', 60', 56, 58);
Bilden der Anordnung (16') in einer Oberfläche der aufgewachsenen Schicht (13); und
Befreien der Anordnung (16') von der aufgewachsenen Schicht (13) unter Belassen einer Anbringung daran über die erste und zweite Abbiegung (28', 26') zum Ermöglichen einer Drehung der Anordnung (16').

12. Verfahren nach Anspruch 11,
dadurch gekennzeichnet,
daß der Aufwachsschritt den Schritt des epitaxialen Aufwachsens einer Siliziumschicht (13) aufweist.

13. Verfahren nach Anspruch 11,
dadurch gekennzeichnet,
daß der Substratbildungsschritt den Schritt der Erzeugung von ätzresistenten dotierten Bereichen entsprechend dem Substrat (14') und den ersten und zweiten Abbiegungen (28', 26) in der Oberfläche der aufgewachsenen Schicht (13) beinhaltet.

14. Verfahren nach Anspruch 11,
dadurch gekennzeichnet,
daß der Befreiungsschritt den Schritt des Ätzens der aufgewachsenen Schicht (13) mit Ausnahme der Bereiche, welche die gebildete Anordnung (16') definieren, aufweist.

15. Verfahren nach Anspruch 13,
dadurch gekennzeichnet,
daß der ätzresistente Abschnitt durch eine Diffusion von Bor in die Oberfläche der aufgewachsenen Schicht (13) erzeugt wird.

16. Verfahren nach Anspruch 10,
dadurch gekennzeichnet,
daß der Halterungsschritt den Schritt des Bildens einer Brückenstruktur einer Oberfläche aus Silizium mit den mehreren Erfassungselektroden (54, 60, 56, 58) als die Anordnung aufweist.

17. Verfahren nach Anspruch 16,
dadurch gekennzeichnet,
daß der Brückenbildungsschritt den Schritt des Bildens der Brückenstruktur aus ätzresistentem Polysilizium oder Silizium aufweist und der Antriebselektroden-Bildungsschritt das Bilden der Antriebselektroden (40, 42) aus ätzresistentem Polysilizium oder Silizium aufweist.

18. Verfahren nach Anspruch 16,
dadurch gekennzeichnet,
daß beide Antriebselektroden und die Brückenstruktur-Bildungsschritte die Schritte des Bildens der Brückenstruktur und der Antriebselektroden (40, 42) aus einem Metall ausgewählt aus der Gruppe mit Nickel und Gold beinhalten.

19. Verfahren zum Bilden einer Kammantriebsstimmgabel-Struktur zur Verwendung in Ratensensoranwendungen mit folgenden Schritten:
Bereitstellen eines Siliziumsubstrats (14") mit einer planaren Oberfläche (12");
Bilden in der planaren Oberfläche (12") einer Vielzahl von Erfassungselektroden (54'', 60'') über eine Öffnung der Isolationsschicht (94);
Bereitstellen eines zweiten Siliziumsubstrats mit einer planaren Oberfläche (98), in das ein ätzresistenter Diffusionsstoff diffundiert ist;
Bondieren des ersten und zweiten Siliziumsubstrats mit den planaren Oberflächen gegeneinander;
Bilden in der Diffusionsschicht (98) einer Anordnung (16") mit Abbiegungen (28", 30"), welche zu Bereichen der isolierenden Schicht (94) des ersten Substrats (14") verlaufen und schwingungsfähige Elemente (18", 20"), die durch Elektrodenelemente (22", 24") gehaltert sind, welche zueinander um eine Drehachse beabstandet sind, die durch die Abbiegungen (28", 30") läuft, wobei die schwingungsfähigen Elemente (18", 20") auf einer jeweiligen ihrer Seiten eine Masse (74'', 76'') und auf einer gegenüberliegenden jeweiligen ihrer Seiten eine Vielzahl von angetriebenen Elektroden (36", 38") in einem ersten und zweiten Satz zum Bilden separierter Finger aufweisen;
Bilden einer Vielzahl von Antriebselektroden (40", 42") in der Diffusionsschicht (98) und physikalisch getrennt von der Anordnung (16") mit Fingern, welche zwischen die Finger der angetriebenen Elektroden (36", 38") passen.

20. Verfahren nach Anspruch 10,
dadurch gekennzeichnet,
daß der Halterungsschritt folgende Schritte aufweist:
Bereitstellen eines zweiten Siliziumsubstrats mit einer planaren Oberfläche mit einer Schicht (98) mit einer darin befindlichen ätzresistenten Diffusion;
Bilden einer dielektrischen Schicht (94) über dem ersten erwähnten Siliziumsubstrat (14"), welche die Vielzahl von Sensorelektroden (54, 60, 56, 58) umgibt;
Bondieren der Diffusionsschicht (98) an die dielektrische Schicht (94) des ersten und zweiten Substrats;
wobei die Anordnung (16") in der Diffusionsschicht (98) in Bereichen gebildet wird, die über der Vielzahl der Erfassungselektroden (54", 60") liegen, indem die zweite Siliziumsubstratdiffusionsschicht (98) selektiv geätzt wird.

21. Verfahren nach Anspruch 19 oder 20,
gekennzeichnet durch den Schritt des Eliminierens im wesentlichen des gesamten zweiten Halbleitersubstrats in dem Bereich der Anordnung (16").

22. Verfahren nach Anspruch 21,
gekennzeichnet durch den Schritt des Schaffens eines metallisierten elektrischen Kontakts (100, 104; 102, 106) an der Anordnung (16").

23. Verfahren nach Anspruch 10 oder 19,
gekennzeichnet durch den Schritt des Bildens der Finger der angetriebenen Elektrode und Antriebselektrode durch folgende Schritte:
Bilden elektrisch leitender Bereiche (44'; 18') in der Anordnung in den Bereichen für die Antriebselektroden und angetriebenen Elektroden (40', 36') und Dimensionieren der Ränder der leitenden Bereiche (44'; 18') durch reaktives Ionen-Ätzen zum Separieren der Antriebselektroden und angetriebenen Elektroden (40'; 36').

24. Trägheitsratensensor nach Anspruch 1,
gekennzeichnet durch:
zumindest eine Halterungsfeder (136), welche das erste Gewichtselement an zumindest einer abschnittsweisen Abbiegung (132) halternd anbringt, welche an zumindest einem Ende einer Halbleitermasse (134) verankert ist.

25. Trägheitsratensensor nach Anspruch 24,
dadurch gekennzeichnet,
daß die zumindest eine Halterungsfeder (140) zum Zulassen einer größeren Nachgiebigkeit gefaltet ist.

## Revendications

1. Capteur de mouvement inertiel comprenant :
un premier élément pesant (18) suspendu de manière à tourner autour d'un premier axe et adapté pour vibrer suivant une direction sensiblement orthogonale audit premier axe ;
un jeu d'électrodes entraînées (36) faisant saillie depuis ledit élément suspendu suivant la direction de vibration ;
un jeu d'électrodes d'entraînement (40) s'imbriquant librement avec ledit jeu d'électrodes entraînées (36) ;
une source d'entraînement en vibration (62) en contact, par l'intermédiaire dudit élément suspendu (18), dudit jeu d'électrodes entraînées (36) et dudit jeu d'électrodes d'entraînement (40), avec des signaux de polarités opposées afin d'induire une vibration dudit élément suspendu (18);
une pluralité de capteurs de position (54, 60) placés en des emplacements faisant face audit élément suspendu (18), l'espacement entre ladite pluralité de capteurs de position (54, 60) et ledit élément suspendu (18) variant en fonction de la rotation de celui-ci autour dudit axe ;
une source de signal électrique (72) pour activer ladite pluralité de capteurs de position (54, 60) par rapport audit élément suspendu (18) ; et
un capteur de signal (72) sensible à au moins un sous-jeu de ladite pluralité de capteurs de position (54, 60) pour recevoir un signal qui varie en fonction de la rotation dudit élément (18) autour dudit axe.

2. Capteur de mouvement selon la revendication 1, incluant en outre un second élément pesant suspendu (20) s'étendant sensiblement parallèlement audit premier élément suspendu (18) sur un côté opposé dudit axe de rotation et comportant un second jeu d'électrodes d'entraînement correspondant (42) connectées à ladite source d'entraînement (62) pour induire une vibration dudit second élément vibrant.

3. Structure microfabriquée à diapason à entraînement par peigne, comprenant :
un substrat (12, 14) ;
un assemblage (16) sur ledit substrat comportant :
des premier et second éléments pouvant vibrer allongés (18, 20) joints au niveau de leurs extrémités par des première et secondes électrodes de support (22, 24) de telle sorte que lesdits premier et second éléments vibrants (18, 20) s'étendent sensiblement parallèlement l'un à l'autre et à un axe de rotation passant entre eux ;
des premier et second moyens de flexion (28, 26) s'étendant depuis lesdites électrodes de support (22, 24) en s'éloignant desdits premier et second éléments pouvant vibrer (18, 20) jusqu'à des points de fixation (29, 32 ; 30, 34) audit substrat (12, 14) suivant ledit axe, permettant ainsi auxdites première et seconde électrodes de supports (22, 24) et auxdits premier et second éléments pouvant vibrer (18, 20) de tourner autour dudit axe ;
des premier et second poids (74, 76) respectivement liés auxdits premier et second éléments pouvant vibrer (18, 20);
chacun desdits premier et second éléments pouvant vibrer (18, 20) comportant une pluralité d'électrodes entraînées (36, 38) faisant saillie en s'éloignant suivant une direction orthogonale audit axe ;
des première et seconde électrodes d'entraînement (40, 42) s'étendant entre les électrodes entraînées (36, 38) desdits premier et second éléments pouvant vibrer (18, 20), lesdites première et seconde électrodes d'entraînement (40, 42) étant physiquement liées audit substrat (12, 14) mais en étant isolées électriquement de celui-ci ;
plusieurs électrodes de détection (54, 60, 56, 58) dans ledit substrat (12, 14) sous lesdites électrodes de support (22, 24) en des emplacements afférents distants dudit axe de rotation,
dans laquelle une partie desdits éléments pouvant vibrer (18, 20), desdites électrodes entraînées et d'entraînement (36, 38 ; 40, 42), desdits poids (74, 76), desdites électrodes de support (22, 24) et desdits moyens de flexion (28, 26) est en un matériau choisi dans le groupe constitué par du silicium conducteur, du polysilicium conducteur et un métal plaqué.

4. Structure selon la revendication 3, dans laquelle ledit métal plaqué est choisi parmi le groupe comprenant du nickel et de l'or.

5. Structure selon la revendication 3, dans laquelle ledit substrat comprend un substrat en silicium à surface diélectrique (14) dans lequel lesdites électrodes d'entraînement (40, 42) et lesdits moyens de flexion (28, 26) sont liés à la surface diélectrique (12) afférente.

6. Structure selon la revendication 3, incluant en outre une fente de libération de contrainte (78, 80) dans lesdites électrodes de support (22, 24) en une position adjacente à un point de fixation pour les moyens de flexion (28, 26).

7. Structure selon la revendication 5, dans laquelle lesdites plusieurs électrodes de détection (54, 60, 56, 58) incluent des régions diffusées dans ledit silicium sous ladite surface diélectrique (12).

8. Structure selon la revendication 3, incluant en outre une source (62) d'énergie électrique d'entraînement liée auxdites électrodes d'entraînement (40, 42) et par l'intermédiaire desdits moyens de flexion (28, 26) auxdites électrodes entraînées (36, 38) pour induire une vibration desdits éléments pouvant vibrer (18, 20) suivant une direction orthogonale audit axe de rotation ;
une source de signal de détection (72) et un capteur de signal de détection (72) connectés en coopération auxdites plusieurs électrodes de détection (54, 60, 56, 58) et auxdites première et seconde électrodes de support (22, 24) pour produire une indication de la rotation desdits premier et second éléments de support (22, 24) autour dudit axe de rotation en réponse à des mouvements inertiels appliqués auxdits éléments pouvant vibrer (18, 20) lorsqu'ils vibrent.

9. Structure selon la revendication 8, comprenant en outre une source d'énergie électrique de couple connectée auxdites première et seconde électrodes de support (22, 24) et à au moins un sous-jeu desdites plusieurs électrodes de détection (54, 60, 56, 58) afin d'imprimer un couple auxdites première et seconde électrodes de support (22, 24) en une position prédéterminée en réponse à des signaux détectés représentatifs d'une rotation desdites première et seconde électrodes de support (22, 24).

10. Procédé de fabrication d'une structure à diapason à entraînement par peigne adaptée pour une sensibilité au mouvement inertiel, comprenant les étapes de :
fourniture d'un substrat en silicium (14) ;
formation dans une surface (12) dudit substrat (14) d'une pluralité d'électrodes de détection (54, 60, 56, 58) isolées électriquement les unes des autres et pouvant être connectées électriquement par l'intermédiaire d'une partie de surface (12) dudit substrat (14);
support au-dessus de la surface (12) dudit substrat (14) comportant ladite pluralité d'électrodes de détection (54, 60, 56, 58) par des moyens de flexion (28, 26) pour une rotation autour d'un axe passant par lesdits moyens de flexion (28, 26), d'un assemblage (16) constitué par des premier et second éléments pouvant vibrer (18, 20) supportés au niveau d'extrémités opposées par des première et seconde électrodes de support (22, 24) de telle sorte que lesdits éléments pouvant vibrer (18, 20) s'étendent sur l'un et l'autre côté dudit axe de rotation et comportent, s'étendant en s'éloignant d'eux, des premier et second jeux d'électrodes entraînées (36, 38) sur un côté et des première et seconde masses respectives (74, 76) sur l'autre côté; et
formation sur ledit substrat (14) de première et seconde électrodes d'entraînement (40, 42) qui s'imbriquent avec lesdites première et seconde électrodes entraînées (36, 38) desdits éléments pouvant vibrer (18, 20) et de contacts électriques pour lesdits premier et second moyens de flexion.

11. Procédé selon la revendication 10, dans lequel ladite étape de support inclut l'étape de :
croissance d'une couche semiconductrice (13) au-dessus de ladite pluralité d'électrodes de détection (54', 60', 56, 58) ;
formation dudit assemblage (16') dans une surface de ladite couche obtenue par croissance (13) ; et
libération dudit assemblage (16') de ladite couche obtenue par croissance (13) en laissant une fixation à celle-ci par l'intermédiaire desdits premier et second moyens de flexion (28', 26') pour permettre une rotation dudit assemblage (16').

12. Procédé selon la revendication 11, dans lequel ladite étape de croissance inclut l'étape de croissance épitaxiale d'une couche en silicium (13).

13. Procédé selon la revendication 11, dans lequel ladite étape de formation de substrat inclut l'étape de production de régions dopées résistant à la gravure correspondant audit substrat (14') et auxdits premier et second moyens de flexion (28', 26') dans la surface de ladite couche obtenue par croissance (13).

14. Procédé selon la revendication 11, dans lequel ladite étape de libération inclut l'étape de gravure de ladite couche obtenue par croissance (13) à l'exception de régions définissant ledit assemblage formé (16').

15. Procédé selon la revendication 13, dans lequel ladite partie résistant à la gravure est créée en diffusant du bore dans la surface de ladite couche obtenue par croissance (13).

16. Procédé selon la revendication 10, dans lequel ladite étape de support inclut l'étape de formation d'une structure de pontage au-dessus de la surface de silicium contenant lesdites plusieurs électrodes de détection (54, 60, 56, 58) en tant que dit assemblage.

17. Procédé selon la revendication 16, dans lequel ladite étape de formation de pont inclut l'étape de formation de la structure de pontage en polysilicium ou en silicium résistant à la gravure et l'étape de formation d'électrodes d'entraînement inclut la formation des électrodes d'entraînement (40, 42) en polysilicium ou en silicium résistant à la gravure.

18. Procédé selon la revendication 16, dans lequel lesdites étapes de formation d'électrodes d'entraînement et de structure de pontage incluent toutes deux des étapes de formation de ladite structure de pontage et desdites électrodes d'entraînement (40, 42) en un métal choisi parmi le groupe comprenant le nickel et l'or.

19. Procédé de formation d'une structure à diapason entraînée par peigne pour une utilisation dans les applications des capteurs de mouvement, comprenant les étapes de :
fourniture d'un substrat en silicium (14") comportant une surface plane (12");
formation dans ladite surface plane (12") d'une pluralité d'électrodes de détection (54", 60") au travers d'une ouverture de couche isolante (94) ;
fourniture d'un second substrat en silicium comportant une surface plane (98) dans laquelle est diffusé un diffusant résistant à la gravure ;
liaison desdits premier et second substrats en silicium surface plane à surface plane ;
formation dans ladite couche de diffusion (98) d'un assemblage (16") comprenant des moyens de flexion (28", 30") s'étendant jusqu'à des régions de ladite couche isolante (94) dudit premier substrat (14") et comportant des éléments pouvant vibrer (18", 20") supportés par des éléments d'électrodes (22", 24") espacés parallèles l'un à l'autre autour d'un axe de rotation passant par lesdits moyens de flexion (28", 30"), lesdits éléments pouvant vibrer (18", 20") comportant sur l'un de leurs côtés respectifs une masse (74", 76") et sur leurs côtés respectifs opposés une pluralité d'électrodes entraînées (36", 38") selon des premier et second jeux formant des doigts séparés ;
formation dans ladite couche de diffusion (98) et de telle sorte qu'elles soient séparées physiquement dudit assemblage (16") d'une pluralité d'électrodes d'entraînement (40", 42") comprenant des doigts s'adaptant entre les doigts desdites électrodes entraînées (36", 38").

20. Procédé selon la revendication 10, dans lequel ladite étape de support inclut les étapes de :
fourniture d'un second substrat en silicium comportant une surface plane munie d'une couche (98) de diffusion résistant à la gravure ;
formation d'une couche diélectrique (94) au-dessus dudit substrat en silicium mentionné en premier (14") de telle sorte qu'elle entoure ladite pluralité d'électrodes de capteur (54, 60, 56, 58)
liaison de ladite couche de diffusion (98) à ladite couche diélectrique (94) respectivement desdits premier et second substrats ;
ledit assemblage (16") étant formé dans ladite couche de diffusion (98) dans des parties s'étendant au-dessus de ladite pluralité d'électrodes de détection (54", 60") au moyen d'une gravure sélective de ladite seconde couche de diffusion de substrat en silicium (98).

21. Procédé selon la revendication 19 ou 20, incluant en outre l'étape d'élimination de sensiblement la totalité dudit second substrat semiconducteur dans la région dudit assemblage (16").

22. Procédé selon la revendication 21, comprenant en outre l'étape de fourniture d'un contact électrique métallisé (100, 104 ; 102, 106) sur ledit assemblage (16").

23. Procédé selon la revendication 10 ou 19, incluant en outre l'étape de formation d'au moins l'un desdits doigts d'électrodes entraînées et d'entraînement au moyen des étapes de :
formation de régions électriquement conductrices (44', 18') dans ledit assemblage dans les régions pour lesdites électrodes d'entraînement et entraînées (40', 36') ; et
dimensionnement de bords desdites régions conductrices (44'; 18') au moyen d'une gravure ionique réactive afin de séparer lesdites électrodes d'entraînement et entraînées (40'; 36').

24. Capteur de mouvement inertiel selon la revendication 1, comprenant en outre au moins un ressort de support (136) liant de façon supportante lesdits premiers éléments pesants à au moins une partie de moyen de flexion (132) ancrée au niveau d'au moins une extrémité à une masse semiconductrice (134).

25. Capteur de mouvement inertiel selon la revendication 24, dans lequel ledit au moins un ressort de support (140) est plié pour permettre une élasticité plus importante.
